# EUROPEAN PATENT SPECIFICATION

(11) **EP 2 919 405 B1**
(45) Date of publication and mention of the grant of the patent: **15.02.2017**
(21) Application number: 13855983.6
(22) Date of filing: 29.08.2013
(51) Int. Cl.: H04L 1/00, H04L 12/24, H04L 12/703, H04L 12/707, H04L 12/721

(54) **MESH PROTECTION METHOD AND DEVICE**
NETZSCHUTZVERFAHREN UND -VORRICHTUNG
PROCÉDÉ ET DISPOSITIF DE PROTECTION DE MAILLE

(30) Priority: 15.11.2012 CN 201210460442
(43) Date of publication of application: 16.09.2015
(73) Proprietor: ZTE Corporation, Shenzhen, Guangdong 518057 (CN)
(72) Inventor: FU, Sen, Shenzhen Guangdong 518057 (CN); ZHANG, Yuanyuan, Shenzhen Guangdong 518057 (CN)
(74) Representative: Price, Nigel John King
(86) International application number: PCT/CN2013/082589
(87) International publication number: WO 2014/075492

(56) References cited:
- EP-A1- 2 326 046
- EP-A1- 2 466 785
- EP-A1- 2 503 742
- CN-A- 102 318 273
- CN-A- 102 611 604
- US-A1- 2005 088 963
- US-A1- 2005 141 415
- US-A1- 2013 064 073

## Description

### TECHNICAL FIELD

The disclosure relates to protection switching techniques for optical transmission networks, and in particular to a method and device for protecting a mesh network.

### BACKGROUD

In Optical Transport Networks (OTNs), as an increase in accessed services, the networks are evolving towards increasing nodes and more complicated topology, thus protection of mesh networks has become a popular technique topic. Implementation of protecting a mesh network in existing techniques is focused on protection of services, switching needs to be performed at upstream/downstream nodes of the services, which is complicated to be implemented, and if there are many nodes in a network, time taken for switching can hardly meet the 50 ms requirements. In addition, end-to-end protection of services needs to configure in advance protection paths of the services, and ends of the protection paths coincide with ends of working paths, in this case, the number of failures resisted by the network is limited, and the number of failures resisted is typically in connection with the number of protection paths, and with an increase in the number of protection paths, utilization of network resources decreases.

Therefore, how to improve the protection switching performance and enhance robustness to failures are key problem demanding prompt solutions in existing techniques for protecting a mesh network.

EP2503742 A1 discloses a method and device for implementing shared mesh protection and an optical network system. The method for implementing shared mesh protection includes: receiving, by a first node, a message of a second type sent by a second node, where the message of the second type carries a second positive incoming sublabel allocated by the second node for a protection path of a first service and the second positive incoming sublabel is used to indicate a specified feature of recovery information of the first service; allocating, by the first node, a first positive outgoing label for the protection path of the first service based on the second positive incoming sublabel, where the first positive outgoing label corresponds to the second positive incoming sublabel; and transmitting the recovery information of the first service to the second node based on an indication of the first positive outgoing sublabel when knowing that a working path of the first service is faulty. Solutions in the embodiments of the present invention enable each node on the protection path to simply and accurately determine a service to be recovered and provide reliable support for subsequently performing automatic and quick protection switchover of the service.

EP2466785 A1 discloses an information processing method in an optical network, an optical communication apparatus, and an optical communication system. The method includes: A node receives a first message from overhead of a first dimension; the node searches for local configuration information, where the local configuration information includes the overhead of the first dimension of a protection path, a protection resource of the first dimension of the protection path, overhead of a second dimension of the protection path, and a protection resource of the second dimension of the protection path; according to the local configuration information and the first message, the node determines a protection path correlated with the first message and determines overhead of the second dimension correlated with the first message; and the node sends a second message to a node adjacent to the second dimension through the overhead of the second dimension correlated with the first message, according to the first message. The technical solutions provided by the embodiments of the present invention can reduce information processing complexity.

### SUMMARY

The method and device for protecting a mesh network provided by embodiments of the disclosure can improve the protection switching performance of the mesh network and enhance its robustness to failures.

The technical solutions of embodiments of the disclosure are implemented as follows.

The embodiment of the disclosure provides a method for protecting a mesh network, which includes:
upon detection of a failure on a protected span, an end node located downstream of a signal stream on the protected span transmits an Automatic Protection Switch (APS) request signalling along at least one protection path of the protected span according to configuration information of the end node; and
upon reception of the APS request signalling, an end node located upstream of the signal stream on the protected span transmits an APS response signalling along a protection path, and performs a bridging/switching operation according to its configuration information; intermediate nodes receiving the APS response signalling performs a straight-forward operation according to respective configuration information; and an end node receiving the APS response signalling and located downstream of the signal stream performs a bridging/switching operation according to its configuration information;
wherein before the detection of the failure, the method may further include:
a node configuration information table is configured for respective nodes in the mesh network, wherein the node configuration information table comprises a ID of a node, a corresponding High Ordered Optical Data Unit k (HO ODUk) port, a corresponding HO ODUk state and a remote signalling;
span protection is configured for the mesh network, at least one protection path is configured for each protected span, and a Shared Mesh Protection (SMP) configuration information table is configured for nodes in the mesh network, wherein the SMP configuration information table comprises a Protection ID (PID), an operating port and a PID route; and
the configuration information includes the node configuration information table and the SMP configuration information table.

When the end node located downstream of the signal stream transmits the APS request signalling along multiple protection paths of the protected span, the end node located upstream of the signal stream selects a protection path for performing protection switching, and an APS response signalling transmitted along the selected protection path carries a Reverse Request (RR) and an APS response signalling transmitted along a non-selected protection path carries a Non-Request (NR).

In an HO ODU of each span in the mesh network, a half of a slot is allocated as protected resources and the other half of the slot is allocated as protecting resources.

The APS request signalling and the APS response signalling are transported through APS overheads or Protection Communication Control (PCC) overheads of the HO ODUk.

When the end node located downstream of the signal stream on the protected span detects that the failure on the protected span disappears, said end node starts a Waiting Time for Recovery (WTR), and transmits a WTR request along the at least one protection path of the protected span, and after receiving the WTR request, the end node located upstream of the signal stream on the protected span responds to the RR, and the end node located upstream of the signal stream and the end node located downstream of the signal stream are in a switching state until the WTR expires;
when the WTR expires, the end node located downstream of the signal stream transmits an APS request signalling carrying the NR along the at least one protection path of the protected span according to its configuration information, releases a corresponding idle port for a node receiving the APS carrying the NR on a protection path performing protection on the protected span, and responds to the NR.

The embodiment of the disclosure further provides a system for protecting a mesh network that includes end nodes located on a protected span and intermediate nodes on a protection path, wherein
an end node located downstream of a signal stream on the protected span is configured to, upon detection of a failure on the protected span, transmit an Automatic Protection Switch (APS) request signalling along at least one protection path of the protected span according to configuration information of the end node;
an end node located upstream of the signal stream on the protected span is configured to, upon reception of the APS request signalling, transmit an APS response signalling along a protection path, and perform a bridging/switching operation according to its configuration information;
intermediate nodes receiving the APS response signalling are configured to perform a straight-forward operation according to respective configuration information; and
an end node receiving the APS response signalling and located downstream of the signal stream is configured to perform a bridging/switching operation according to its configuration information;
wherein the configuration information includes the node configuration information table and the SMP configuration information table,
wherein the node configuration information table comprises a ID of a node, a corresponding High Ordered Optical Data Unit k (HO ODUk) port, a corresponding HO ODUk state and a remote signalling; and
wherein the SMP configuration information table comprises a Protection ID (PID), an operating port and a PID route.

When the end node located downstream of the signal stream transmits the APS request signalling along multiple protection paths of the protected span, the end node located upstream of the signal stream is configured to select a protection path for performing protection switching, wherein an APS response signalling transmitted along the selected protection path carries a Reverse Request (RR) and an APS response signalling transmitted along a non-selected protection path carries a Non-Request (NR).

In an HO ODU of each span in the mesh network, a half of a slot is allocated as protected resources and the other half of the slot is allocated as protecting resources.

The APS request signalling and the APS response signalling are transported through APS overheads or Protection Communication Control (PCC) overheads of the HO ODUk.

The end node located downstream of the signal stream on the protected span is further configured to, when detecting that the failure on the protected span disappears, start a Waiting Time for Recovery (WTR), and transmit a WTR request along the at least one protection path of the protected span, and after receiving the WTR request, the end node located upstream of the signal stream on the protected span responds to the RR, and the end node located upstream of the signal stream and the end node located downstream of the signal stream are in a switching state until the WTR expires;
when the WTR expires, the end node located downstream of the signal stream transmits an APS request signalling carrying the NR along the at least one protection path of the protected span according to its configuration information, releases a corresponding idle port for a node receiving the APS carrying the NR on a protection path performing protection on the protected span, and responds to the NR.

The method and device for protecting a mesh network provided by embodiments of the disclosure can improve the protection switching performance of the mesh network and enhance its robustness to failures so that at least two failures in a pipeline can be resisted.

### BRIEF DESCRIPTION OF THE DRAWINGS

Fig. 1 is a flow chart of a method for protecting a mesh network according to an embodiment of the disclosure;
Fig. 2 is a schematic diagram showing a mesh network according to an embodiment of the disclosure;
Fig, 3 is a schematic diagram showing resource division according to an embodiment of the disclosure;
Fig. 4 is a schematic diagram showing node ID configuration according to an embodiment of the disclosure;
Fig. 5 is a schematic diagram showing span configuration according to an embodiment of the disclosure;
Fig. 6 is a schematic diagram showing service configuration according to an embodiment of the disclosure;
Fig. 7 is a schematic diagram showing selection of a protection path for requesting when one unidirectional failure is processed according to an embodiment of the disclosure;
Fig. 8 is a schematic diagram showing a node bridging/switching operation according to an embodiment of the disclosure;
Fig. 9 is a schematic diagram showing a node straight-forward operation according to an embodiment of the disclosure;
Fig. 10 is a first schematic diagram showing service streams before/after protection switching according to an embodiment of the disclosure;
Fig. 11 is a second schematic diagram showing service streams before/after protection switching according to an embodiment of the disclosure;
Fig. 12 is a third schematic diagram showing service streams before/after protection switching according to an embodiment of the disclosure;
Fig. 13 is a schematic diagram showing selection of a protection path for requesting when two unidirectional failures are processed according to an embodiment of the disclosure;
Fig. 14 is a schematic diagram showing service streams after switching when two unidirectional failures are processed according to an embodiment of the disclosure;
Fig. 15 is a schematic diagram showing that two protection path directions are requested simultaneously when one unidirectional failure is processed according to an embodiment of the disclosure;
Fig. 16 is a schematic diagram showing that two protection path directions are requested simultaneously when two unidirectional failures are processed according to an embodiment of the disclosure;
Fig. 17 is a schematic diagram showing processing when one failure disappears during processing of two unidirectional failures according to an embodiment of the disclosure; and
Fig, 18 is a schematic structural diagram of a system for protecting a mesh network according to an embodiment of the disclosure.

### DETAILED DESCRIPTION

Technical solutions of the disclosure will be further elaborated below in combination with accompanying drawings and specific embodiments.

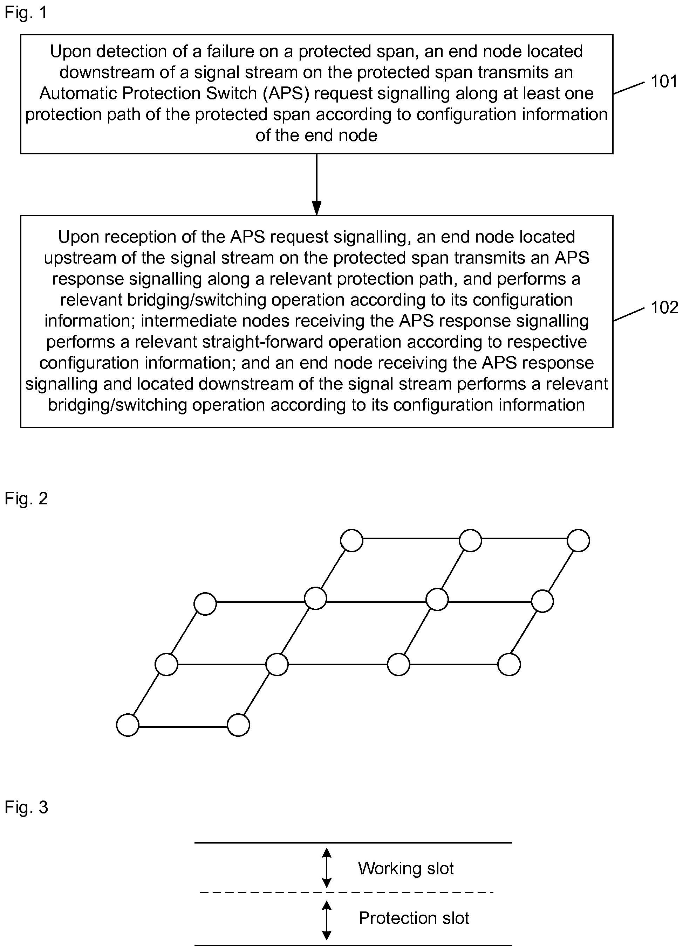

The embodiment of the disclosure provides a method for protecting a mesh network, as shown in Fig. 1, which includes:
Step 101, upon detection of a failure on a protected span, an end node located downstream of a signal stream on the protected span transmits an Automatic Protection Switch (APS) request signalling along at least one protection path of the protected span according to configuration information of the end node.

Preferably, When the end node located downstream of the signal stream transmits the APS request signalling along multiple protection paths of the protected span, the end node located upstream of the signal stream selects a protection path for performing protection switching, and an APS response signalling transmitted along the selected protection path carries a Reverse Request (RR) and an APS response signalling transmitted along a non-selected protection path carries a Non-Request (NR).

Before the detection of the failure, a node configuration information table is configured for respective nodes in the mesh network, wherein the node configuration information table comprises a relevant ID of a node, a corresponding High Ordered Optical Data Unit k (HO ODUk) port, a corresponding HO ODUk state and a remote signalling;
span protection is configured for the mesh network, at least one protection path is configured for each protected span, and a Shared Mesh Protection (SMP) configuration information table is configured for nodes in the mesh network, wherein the SMP configuration information table comprises a Protection ID (PID), an operating port and a PID route; and
the configuration information includes the node configuration information table and the SMP configuration information table.

In an HO ODU of each span in the mesh network, a half of a slot is allocated as protected resources and the other half of the slot is allocated as protecting resources.

The APS request signalling and the APS response signalling are transported through APS overheads or Protection Communication Control (PCC) overheads of the HO ODUk.

Step 102, upon reception of the APS request signalling, an end node located upstream of the signal stream on the protected span transmits an APS response signalling along a relevant protection path, and performs a relevant bridging/switching operation according to its configuration information; intermediate nodes receiving the APS response signalling performs a relevant straight-forward operation according to respective configuration information; and an end node receiving the APS response signalling and located downstream of the signal stream performs a relevant bridging/switching operation according to its configuration information.

When the end node located downstream of the signal stream on the protected span detects that the failure on the protected span disappears, said end node starts a Waiting Time for Recovery (WTR), and transmits a WTR request along the at least one protection path of the protected span, and after receiving the WTR request, the end node located upstream of the signal stream on the protected span responds to the RR, and the end node located upstream of the signal stream and the end node located downstream of the signal stream are in a switching state until the WTR expires;
when the WTR expires, the end node located downstream of the signal stream transmits an APS request signalling carrying the NR along the at least one protection path of the protected span according to its configuration information, releases a corresponding idle port for a node receiving the APS carrying the NR on a protection path performing protection on the protected span, and responds to the NR.

The method for protecting a mesh network according to the disclosure will be further elaborated below with reference to specific embodiments.

Taking the protection of a mesh network including a High-Ordered (HO) Optical Data Unit (ODU) as an example, the specific implementation of embodiments of the disclosure is illustrated as follows. In the mesh network including a high-ordered ODU, the protection of a mesh network is implemented in a way as shown below.
1. In an HO ODU of each span, a half of a slot is allocated as protected resources and the other half of the slot is allocated as protecting resources;
2. each protected span is a Sub-Network Connection (SNC) Protection Unit;
3. after having a failure, each protected span is switched to its protection path configured in advance;
4. the condition for triggering protection is an inherently detected failure or a failure in a serving layer;
5. the APS signalling is transported through Automatic Protection Switch (APS) overheads or Protection Communication Control (PCC) overheads of the HO ODUk;
6. from a perspective of services, the switching is in a wrapping way and is performed at two ends of the HO ODUk;
7. a straight-forward operation is performed on relevant HO ODUks on protecting resources.

In topology of a physical network, what performed firstly is division of working resources and protecting resources of the network, as shown in Fig. 2, a portion of spans in the figure are divided to an HO ODU shared mesh, with each span configured with an HO ODU resource, wherein 0 to 1/2 of a slot is allocated as a protected resource, and 1/2 to 1 of the slot is allocated as a protecting resource, as shown in Fig. 3. Then nodes of the network are configured, and the specific configuration method is as follows.

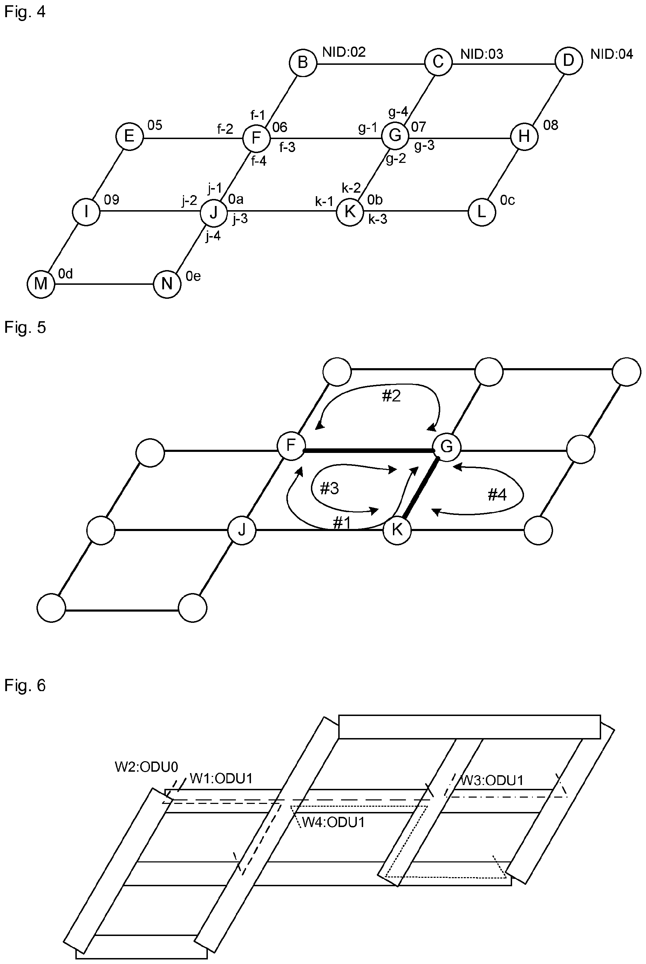

Each node scheduled by an ODUk is allocated with a Node ID (NID), as shown in Fig. 4; nodes are configured with their respective node configuration information tables, and taking nodes F, J, K, G as examples, the node configuration information table configured for node F is as shown in below Table 1.

**Table 1**

| Relevant IDs of nodes | Corresponding HO ODUk port | Corresponding HO ODUk state | Remote signalling |
|---|---|---|---|
| 02 | f-1 | Idle | NR (Non Request) |
| 05 | f-2 | Idle | NR |
| 07 | f-3 | Idle | NR |
| 0a | f-4 | Idle | NR |

Node configuration information table configured for node J is as shown in Table 2.

**Table 2**

| Relevant IDs of nodes | Corresponding HO ODUk port | Corresponding HO ODUk state | Remot e signalling |
|---|---|---|---|
| 06 | j-1 | Idle | NR |
| 09 | j-2 | Idle | NR |
| 0b | j-3 | Idle | NR |
| 0e | j-4 | Idle | NR |

Node configuration information table configured for node K is as shown in Table 3.

**Table 3**

| Relevant IDs of nodes | Corresponding HO ODUk port | Corresponding HO ODUk state | Remot e signalling |
|---|---|---|---|
| 0a | k-1 | Idle | NR |
| 07 | k-2 | Idle | NR |
| 0c | k-3 | Idle | NR |

Node configuration information table configured for node G is as shown in Table 4.

**Table 4**

| Relevant IDs of nodes | Corresponding HO ODUk port | Corresponding HO ODUk state | Remote signalling |
|---|---|---|---|
| 06 | g-1 | Idle | NR |
| 0b | g-2 | Idle | NR |
| 08 | g-3 | Idle | NR |
| 03 | g-4 | Idle | NR |

The above node configuration information table includes a relevant ID of a node, a corresponding HO ODUk port, a corresponding HO ODUk state and a remote signalling. The so-called relevant ID of a node refers to an ID of a node relevant to or adjacent to the node, for example, the relevant ID of the node in the configuration information table of node G refers to an ID of a node relevant to or adjacent to node G. Local actions are determined by a local failure state in conjunction with a remote signalling state, since the node has multiple remote directions, the remote state of each direction is stored to facilitate access and calculation.

Configuration of Span Protection (SP): each protected span is configured with at least one protection path, as shown in Fig. 5 that takes FG and GK as examples of the protected span.

Two SPs can be configured for FG, i.e., PID#1{060a, 0a0b, 0b07} and PID#2{0602, 0203, 0307}, selection of PID routes by the two SPs must be separate; the so-called separate means that path risk is separate, that is to say two PID routes can not be coincided.

GK can be configured with two SPs: PID#3{0706, 060a, 0a0b} and PID#4{0708, 080c, 0c0b}, and selection of PID routes by the two SPs must also be separate.

Protection Identity (PID) information is configured to all nodes relevant to the PID, nodes F, J, K and G are configured with a Shared Mesh Protection (SMP) configuration information table, and the SMP configuration information table configured for node F is as shown in below table 5.

**Table 5**

| PID | Working port | PID routing (NID queue) |
|---|---|---|
| #1 | f-3 | 06, 0a, 0b, 07 |
| #2 | f-3 | 06, 02, 03, 07 |
| #3 | - | 07, 06, 0a, 0b |

SMP configuration information table configured for node J is as shown in Table 6.

**Table 6**

| PID | Working port | PID routing (NID queue) |
|---|---|---|
| #1 | - | 06, 0a, 0b, 07 |
| #3 | - | 06, 02, 03, 07 |

SMP configuration information table configured for node K is as shown in Table 7.

**Table 7**

| PID | Working port | PID routing (NID queue) |
|---|---|---|
| #1 | - | 06, 0a, 0b, 07 |
| #3 | k-2 | 07, 06, 0a, 0b |
| #4 | k-2 | 07, 08, 0c, 0b |

SMP configuration information table configured for node G is as shown in Table 8.

**Table 8**

| PID | Working port | PID routing (NID queue) |
|---|---|---|
| #1 | g-1 | 06, 0a, 0b, 07 |
| #2 | g-1 | 06, 02, 03, 07 |
| #3 | g-2 | 07, 06, 0a, 0b |
| #4 | g-2 | 07, 08, 0c, 0b |

The above SMP configuration information table includes a PID of a node, an operating port and PID route information corresponding to the PID.

Then, on a protected span which has been configured, protected services, such as W1, W2, W3, W4 as shown in Fig. 6, can be configured arbitrarily.

The implementation method of protection switching according to an embodiment of the disclosure will be described below through two typical scenarios in SMP of high ordered ODUs. In a mesh network according to an embodiment of the disclosure, each span corresponds to two protection paths. There are multiple ways to select a protection path, the way taken in a first embodiment of the disclosure is to search for SMP configuration information of a node so that a first idle PID can be sequentially sought out therefrom and then be used.

The scenario 1 refers to a case where one unidirectional failure of an optical fiber occurs in a network.

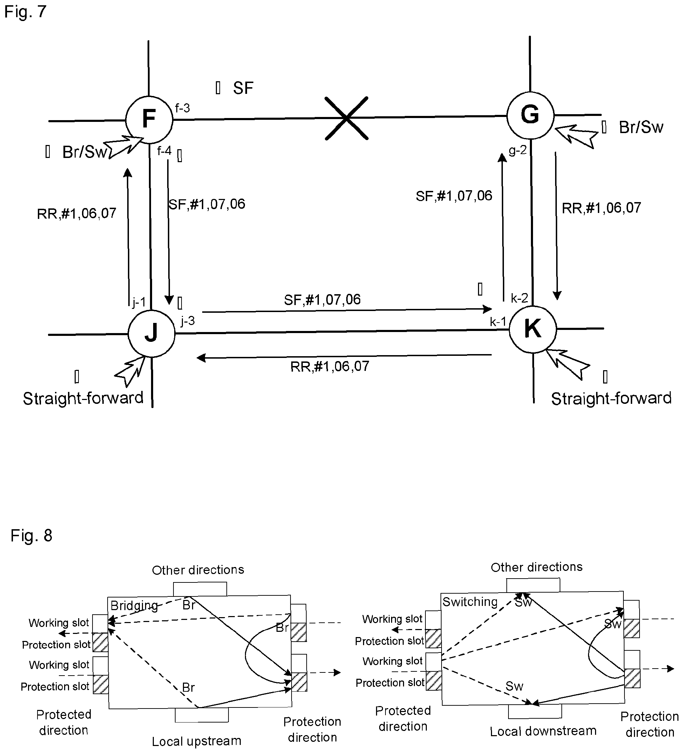

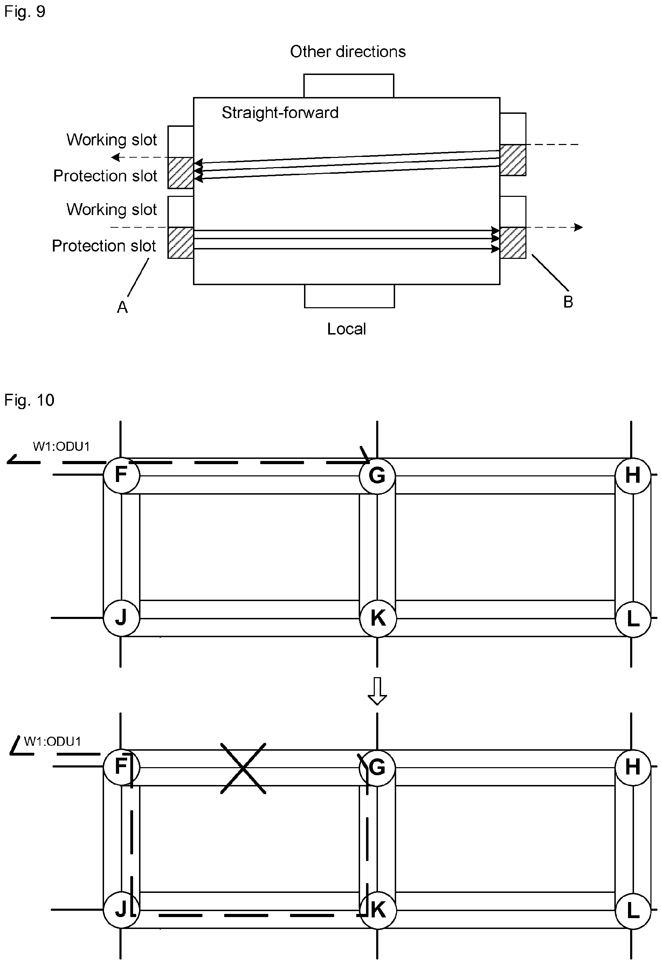

Fig. 7 shows an implementation method for selecting a PID for request when a unidirectional failure occurs in the direction from G to F (G→F) and the specific processing steps include:
after detecting that port f-3 fails, node F searches its SMP configuration information table (i.e., the above table 5), finds a PID corresponding to port f-3, and selects in sequence a first idle PID, i.e., PID#1; searches for a PID route of PID#1, finds that the NID of a downstream node of node F is "0a"; searches a node configuration information table (i.e., the above table 1) of node F and obtains an HO ODUk port (i.e., f-4) corresponding to "0a" and an HO ODUk state (idle);
when determining that the HO ODUk state of the downstream node "0a" is idle, node F transmits an APS signalling to an APS/PCC overhead of an HO ODU of corresponding port f-4, and the APS signalling includes: request state (SF), PID (#1), T-NID of a terminal node ("07"), S-NID of a source node ("06");
node J detects that APS/PCC byte of an HO ODU of its port j-1 (port j-1 and port f-4 belong to corresponding ports on both ends of a same span, thus port j-1 corresponds to port f-4) changes, then below processing is performed:
   node J parses PID information in the APS signalling, and determines that it is a request initiated by SP of #1;
   node J parses the T-NID ("07") and the S-NID ("06") in the APS signalling, searches its SMP configuration information table (i.e., the above table 6) and obtains a PID route of PID#1, and determines in conjunction with the T-NID and the S-NID that the signalling request direction is 06→0a→0b→07, and the NID of a downstream node of node J is "0b";
   node J searches its node configuration information table (i.e., the above table 2), and when determining that the state of "0b" is idle, then the node J transmits an APS signalling to an APS/PCC overhead of an HO ODU of corresponding port j-3, and the APS signalling includes: request state (SF), PID (#1), T-NID of a terminal node ("07"), S-NID of a source node ("06");
node K detects that APS/PCC byte of an HO ODU of its port k-1 (port k-1 corresponds to port j-3) changes, then below processing is performed:
   node K parses PID information in the APS signalling, and determines that it is a request initiated by SP of #1;
   node K parses the T-NID ("07") and the S-NID ("06") in the APS signalling, searches its SMP configuration information table (i.e., the above table 7) and obtains a PID route of PID#1, and determines in conjunction with the T-NID and the S-NID that the signalling request direction is 06→0a→0b→07, and the NID of a downstream node of node K is "07";
   node K searches its node configuration information table (i.e., the above table 3), and when determining that the state of "07" is idle, then the node K transmits an APS signalling to an APS/PCC overhead of an HO ODU of corresponding port k-2, and the APS signalling includes: request state (SF), PID (#1), T-NID of a terminal node ("07"), S-NID of a source node ("06");
node G detects that APS/PCC byte of an HO ODU of its port g-2 (port g-2 corresponds to port k-2) changes, then below processing is performed:
   node G parses PID information in the APS signalling, and determines that it is a request initiated by SP of #1;
   node G parses the T-NID ("07") and the S-NID ("06") in the APS signalling, determines that node G is the terminal node of the APS request, then responds to port g-2 with the APS signalling, and the response includes: response state (RR), PID (#1), S-NID of a source node ("06"), T-NID of a terminal node ("07");
   node G performs a local Bridging/Switching (Br/Sw) operation;
according to the PID route (06, 0a, 0b, 07), the local NID is "07", thus the slot of port "06" needs to be switched to port "0b";
according to the node configuration information table (i.e., the above table 4) of node G, "06" corresponds to port g-1, "0b" corresponds to port g-2, the bridging/switching operation as shown in Fig. 8 is performed;
bridging operation: connections transmitted by a local upstream router to a protected port are changed to a port in a protecting direction; connections transmitted in other directions to the protected port are changed to a port in the protecting direction; wherein the other directions include the protecting direction;
switching operation: connections transmitted by the protected port to a local downstream router are changed to a port in the protecting direction; connections transmitted by the protected port to other directions are changed to a port in the protecting direction; wherein the other directions include the protecting direction;
node K detects that APS/PCC byte of its port k-2 (port k-2 corresponds to port g-2) changes, then node K transmits to port k-1an APS signalling that includes: response state (RR), PID (#1), T-NID of a terminal node ("06"), S-NID of a source node ("07"); and node K performs a straight-forward operation;
according to the PID route (06, 0a, 0b, 07), the local NID is "0b", thus the slot of port "07" needs to be straight-forwarded to port "0a";
according to the node configuration information table (i.e., the above table 3) of node K, "07" corresponds to port k-2, "0a" corresponds to port k-1, and a straight-forward operation as shown in Fig. 9 is performed; the straight-forward operation connects a protection slot in "07" direction to "0a" direction;
straight-forward operation: a connection is established from the protection slot straight-forwarding to A direction to the protection slot straight-forwarding to B direction; so that services can reach through a protection channel of the node.
node J detects that APS/PCC byte of its port j-3 (port j-3 corresponds to port k-1) changes, then node J transmits to port j-1an APS signalling that includes: response state (RR), PID (#1), T-NID of a terminal node ("06"), S-NID of a source node ("07"); and node J performs a straight-forward operation;
according to the PID route (06, 0a, 0b, 07), the local NID is "0a", thus the slot of port "0b" needs to be switched to port "06";
according to the node configuration information table (i.e., the above table 2) of node J, "0b" corresponds to port j-3, "06" corresponds to port j-1, and a straight-forward operation connects a protection slot in "0b" direction to "06" direction;
node F detects that APS/PCC byte of its port f-3 (port f-4 corresponds to port j-1) changes, determines that the node F is a T-NID node of the current request (i.e., response), and performs a bridging/switching operation;
according to the PID route (06, 0a, 0b, 06), the local NID is "06", thus the slot of port "07" needs to be switched to port "0a";
according to the node configuration information table (i.e., the above table 1) of node F, "07" corresponds to port f-3, "0a" corresponds to port f-4, and the bridging/switching operation is performed;
Until then, the protection switching operation is completed.

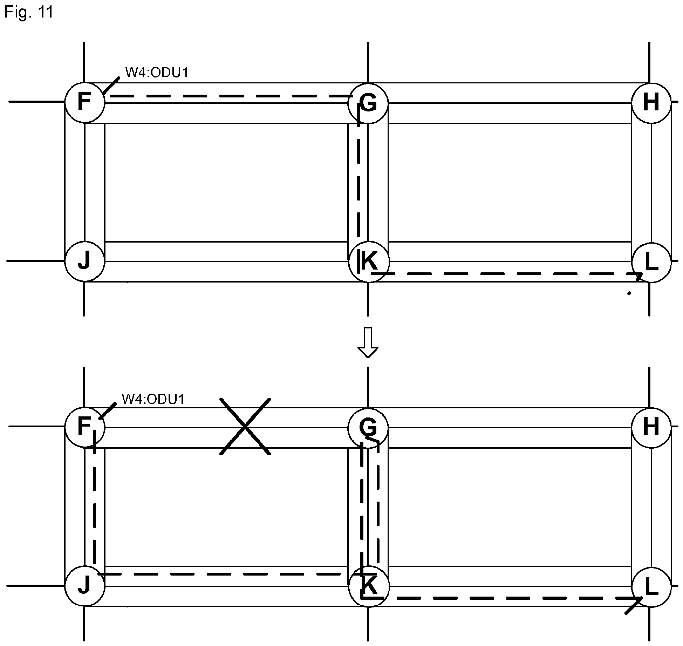

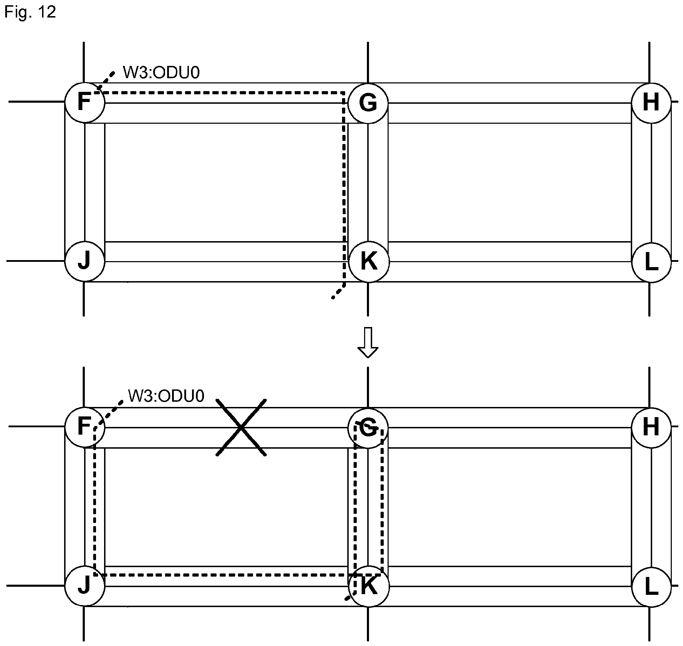

Fig. 10 shows a comparison of traffics of the protected service W1 configured on span FG before/after the switching; Fig. 11 shows a comparison of traffics of the protected service W4 configured on span FG before/after the switching; and Fig. 12 shows a comparison of traffics of the protected service W3 configured on span FG before/after the switching.

The scenario 2 refers to a case where two unidirectional failures of an optical fiber occurs in a network.

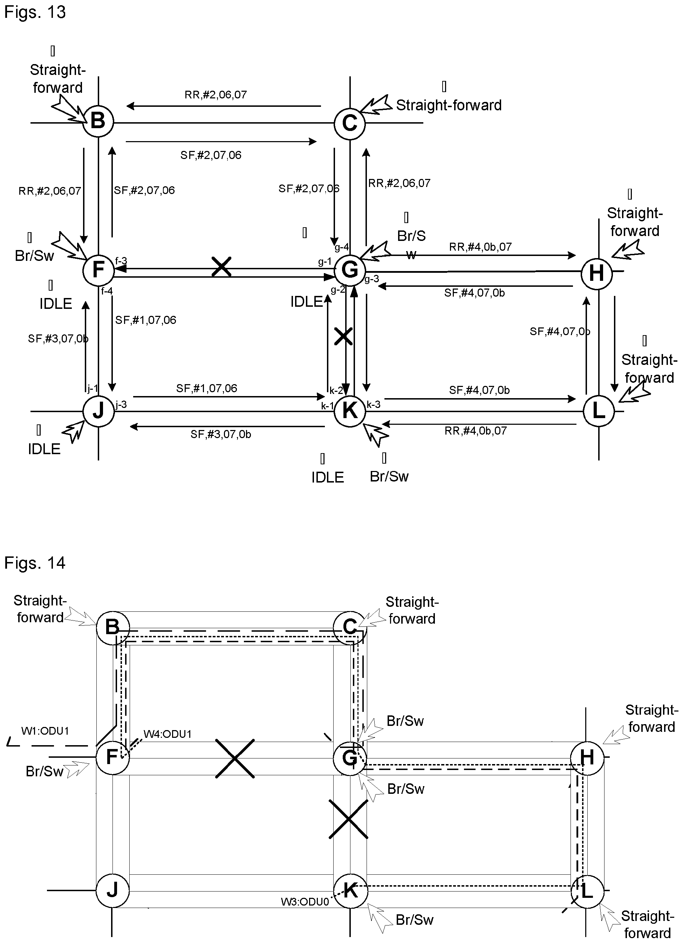

Besides the failure occurs on G→F, a failure also occurs on G→K, then the switching caused by the failure on G→F needs to be roll-backed to another protection link PID#2, PID#4 is selected to switch the failure on G→K, as shown in Fig. 13, specific steps include:
when detecting an alert, node K determines that there is also an alert on remote sides of PID#1 path and PID#3 path, performs idle operation on port k-1 (i.e., returning back to its initial state), transmits an SF request to a PID#1 direction, releases a connection in the PID#1 direction, and in the mean time transmits an SF request to a PID#4 direction and selects PID#4 to perform switching of the failure on G→K;
node J detects that APS/PCC byte of its port j-3 (port j-3 corresponds to port k-1) changes, then node J transmits to port j-1an APS signalling that includes:
   response state (RR), PID (#1), T-NID of a terminal node ("06"), S-NID of a source node ("0b"); and node J determines that the APS signalling comes from two directions (i.e., node F direction and node K direction) with an SF in each direction, then an idle operation is performed locally;
node F detects that APS/PCC byte of its port f-4 (port f-4 corresponds to port j-1) changes, then node F transmits to port f-3 an APS signalling that includes:
   response state (RR), PID (#1), T-NID of a terminal node ("06"), S-NID of a source node ("0b"); and node F determines that services of a local channel (i.e., port f-3) are in the SF, and a local remote signalling (i.e., signalling in node K direction) is also in the SF, then the idle operation is performed on port f-4; node F searches its node configuration table (i.e., the above table 1), determines that the state of port f-1 is idle, then transmits an SF request to PID#2, transmits the APS signalling to an APS/PCC overhead of an HO ODU of corresponding port f-1, and the APS signalling includes:
      request state (SF), PID (#2), T-NID of a terminal node ("07"), S-NID of a source node ("06");
node G detects that APS/PCC byte of its port g-4 changes, then below processing is performed:
   node G parses PID information in the APS signalling, and determines that it is a request initiated by SP of #2;
   node G parses the T-NID ("07") and the S-NID ("06") in the APS signalling, determines that node G is the terminal node of the APS request and the local port g-4 is idle, then a bridging/switching operation is performed on port g-4, then responds to port g-3 with the APS signalling, and the response includes: response state (RR), PID (#2), S-NID of a source node ("07"), T-NID of a terminal node ("06"); it is determined that port g-2 per se is in a switching state, then port g-2 is released, and switching of port g-4 is performed;
node C receives the RR in PID#2 direction, and performs a straight-forward operation;
node B receives the RR in PID#2 direction, and performs a straight-forward operation;
node F receives the RR in PID#2 direction, and performs switching of port f-3;
node G receives the SF request in PID#4 direction, and determines that port g-3 is idle, performs switching of port g-3 and responds to PID#4 with the RR;
node H receives the RR in PID#4 direction, performs a straight-forward operation, and transmits the RR to downstream node L;
node L receives the RR in PID#4 direction, performs a straight-forward operation, and transmits the RR to downstream node K;
⑪node K receives the RR, and performs switching of port k-3.

The service state after the switching is as shown in Fig. 14.

Embodiment 2 also uses SMP configuration information of a high ordered ODU in embodiment 1, and the difference between embodiment 2 and embodiment 1 lies in the selection method of a PID. The selection method of PID in embodiment 2 includes: a request is made simultaneously in two PID directions when there is a failure, and then the terminal node determines one of the PIDs as a local response to the request, and responds to an RR (Reverse Request), and another channel then responds to an NR (Non-Request); and a node receiving the response to the RR performs protection switching.

The implementation of the embodiment of the disclosure will be described below through three scenarios.

The scenario 1 refers to a case where one unidirectional failure of an optical fiber occurs in a network.

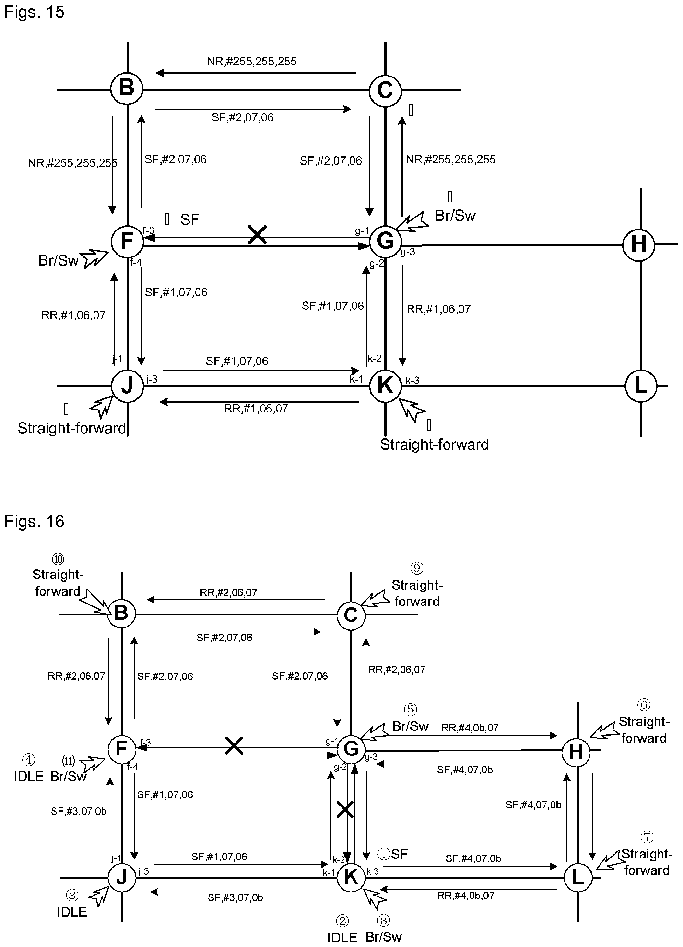

Fig. 15 shows a processing process for performing switching by simultaneously requesting in two PID directions when a failure occurs in G→F direction, and the steps are as follows.

After detecting that port f-3 fails, node F searches its SMP configuration information table (i.e., the above table 5), and finds protection paths PID#1 and PID#2 corresponding to port f-3. Node F searches a PID route of PID#1, finds that an NID of a downstream node of node F is "0a", searches a node configuration information table (i.e., the above table 1) of node F and obtains an HO ODUk port (i.e., f-4) corresponding to "0a", then the node F transmits an APS signalling to an APS/PCC overhead of an HO ODU of corresponding port f-4, and the APS signalling includes: request state (SF), PID (#1), T-NID of a terminal node ("07"), S-NID of a source node ("06"). Node F searches a PID route of PID#2, finds that an NID of a downstream node of node F is "02", searches the node configuration information table (i.e., the above table 1) of node F and obtains an HO ODUk port (i.e., f-1) corresponding to "02" and the state of the HO ODUk (being idle), then the node F transmits an APS signalling to an APS/PCC overhead of an HO ODU of corresponding port f-1, and the APS signalling includes: request state (SF), PID (#2), T-NID of a terminal node ("07"), S-NID of a source node ("06"). Nodes J, K, B, C receive an SF request and continue to transport it to downstream nodes.

If node G detects firstly that APS/PCC byte of an HO ODU of its port g-2 (port g-2 corresponds to port k-2) changes, then below processing is performed:
node G parses PID information in the APS signalling, and determines that it is a request initiated by SP of #1;
node G parses the T-NID ("07") and the S-NID ("06") in the APS signalling, determines that node G is the terminal node of the APS request, then responds to port g-2 with the APS signalling, and the response includes: response state (RR), PID (#1), S-NID of a source node ("06"), T-NID of a terminal node ("07");
node G performs a local Bridging/Switching (Br/Sw) operation;
   according to the PID route (06, 0a, 0b, 07), the local NID is "07", thus the slot of port "06" needs to be switched to port "0b";
   according to the node configuration information table (i.e., the above table 4) of node G, "06" corresponds to port g-1, "0b" corresponds to port g-2, the bridging/switching operation as shown in Fig. 8 is performed;
Node G receives, once again, the SF request of PID#2, determines that port g-1 has been in a switching state, and then responds to the NR;
node K detects that APS/PCC byte of its port k-2 (port k-2 corresponds to port g-2) changes, then node K transmits to port k-1an APS signalling that includes: response state (RR), PID (#1), S-NID of a source node ("06"), T-NID of a terminal node ("07"); and node K performs a straight-forward operation;
   according to the PID route (06, 0a, 0b, 07), the local NID is "0b", thus the slot of port "07" needs to be straight-forwarded to port "0a";
   according to the node configuration information table (i.e., the above table 3) of node K, "07" corresponds to port k-2, "0a" corresponds to port k-1, and a straight-forward operation as shown in Fig. 9 is performed; the straight-forward operation connects a protection slot in "07" direction to "0a" direction;
Node C receives the NR response, no switching processing is performed, and continues to transmit the NR to downstream nodes;
node J detects that APS/PCC byte of its port j-3 (port j-3 corresponds to port k-1) changes, then node J transmits to port j-1an APS signalling that includes: response state (RR), PID (#1), T-NID of a terminal node ("06"), S-NID of a source node ("07"); and node J performs a straight-forward operation;
   according to the PID route (06, 0a, 0b, 07), the local NID is "0a", thus the slot of port "0b" needs to be switched to port "06";
   according to the node configuration information table (i.e., the above table 2) of node J, "0b" corresponds to port j-3, "06" corresponds to port j-1, and a straight-forward operation connects a protection slot in "0b" direction to "06" direction;
   node F detects that APS/PCC byte of its port f-3 (port f-4 corresponds to port j-1) changes, determines that the node F is a T-NID node of the current request (i.e., response), and performs a bridging/switching operation;
   according to the PID route (06, 0a, 0b, 06), the local NID is "06", thus the slot of port "07" needs to be switched to port "0a";
   according to the node configuration information table (i.e., the above table 1) of node F, "07" corresponds to port f-3, "0a" corresponds to port f-4, and the bridging/switching operation is performed; Until then, the protection switching operation is completed.

The scenario 2 refers to a case where two unidirectional failures of an optical fiber occurs in a network.

Besides the failure on G→F, a failure also occurs on G→K, then the processing process is as shown in Fig. 16, and specific steps include:
After detecting that port k-2 fails, node K searches its SMP configuration information table (i.e., the above table 7), and finds protection paths PID#3 and PID#4 corresponding to port k-2. Node K searches a PID route of PID#3, finds that an NID of a downstream node of node K is "0a", searches a node configuration information table (i.e., the above table 3) of node K and obtains an HO ODUk port (i.e., k-1) corresponding to "0a", then the node K transmits an APS signalling to an APS/PCC overhead of an HO ODU of corresponding port k-1, and the APS signalling includes: request state (SF), PID (#3), T-NID of a terminal node ("07"), S-NID of a source node ("0b"). Node K searches a PID route of PID#4, finds that an NID of a downstream node of node K is "0c", searches a node configuration information table (i.e., the above table 3) of node K and obtains an HO ODUk port (i.e., k-3) corresponding to "0c", then the node K transmits an APS signalling to an APS/PCC overhead of an HO ODU of corresponding port k-3, and the APS signalling includes: request state (SF), PID (#4), T-NID of a terminal node ("07"), S-NID of a source node ("0b").

Node K determines that the local remote signalling (i.e., signalling in a node F direction) has the SF and a local channel (i.e., port k-2) also has the SF, then an idle operation is performed, and all connections are returned to respective original states;
node J detects that APS/PCC byte of its port j-3 (port j-3 corresponds to port k-1) changes, then node J transmits to port j-1an APS signalling that includes: response state (RR), PID (#3), T-NID of a terminal node ("07"), S-NID of a source node ("0b"); and node J determines that the APS signalling comes from two directions (i.e., node F direction and node K direction) with an SF in each direction, then an idle operation is performed locally;
node F detects that APS/PCC byte of its port f-4 (port f-4 corresponds to port i-1) changes, then node F transmits to port f-3 an APS signalling that includes: request state (SF), PID (#3), T-NID of a terminal node ("07"), S-NID of a source node ("0b"); and node F determines that services of the local channel (i.e., port f-3) are in the SF and the local remote signalling (i.e., signalling in a node K direction) is also in the SF, then an idle operation is performed locally;
node G detects that APS/PCC byte of an HO ODU of its port g-1 (port g-1 corresponds to port f-3) changes, then below processing is performed:
node G parses request content in its APS signalling, it is determined that a failure occurs in both the node F direction and the node K direction, then node G releases port g-2, and releases an SF request inhibited by port g-4, performs switching on port g-4, and responds to the RR in the g-4 port direction.

Node G detects that APS/PCC byte of its port g-3 changes, then below processing is performed:
node G parses PID information in the APS signalling, and determines that it is a request initiated by SP of #4;
node G parses the T-NID ("07") and the S-NID ("0") in the APS signalling, determines that node G is the terminal node of the APS request and the local port g-3 is idle, then a bridging/switching operation is performed on port g-3, then responds to port g-3 with the APS signalling, and the response includes: response state (RR), PID (#4), S-NID of a source node ("07"), T-NID of a terminal node ("0b");
node H receives the RR response, performs a straight-forward operation on PID#4, and continues to transmit the RR response to a downstream node;
node L receives the RR response, performs a straight-forward operation on PID#4, and continues to transmit the RR response to a downstream node;
node K receives the RR response of port k-3, and performs a bridging/switching operation on PID#4;
node C receives the RR response, performs a straight-forward operation on PID#2, and continues to transmit the RR response to a downstream node B;
node B receives the RR response, performs a straight-forward operation on PID#2, and continues to transmit the RR response to a downstream node F;
(11) node F receives the RR response of port f-1, and performs a bridging/switching operation on PID#2.

Until then, the protection switching operation is completed.

Scenario 3 refers to a case where a failure in a network disappears.

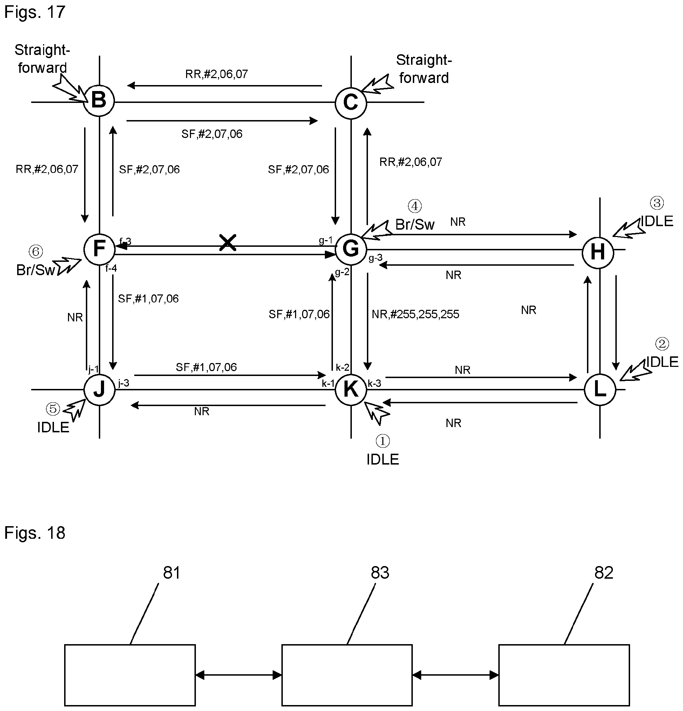

Fig. 17 shows a processing process after a failure on G→K disappears. After detecting that an alert disappears, node K starts firstly a Waiting Time for Recovery (WTR), and transmits a WTR request to PID#3 and PID#4; after receiving the WTR request, node G responds to the RR, and states of node K and node G are in a switching state until the WTR expires. Processing steps after the WTR expires are as follows.

After the WTR expires, node K searches its SMP configuration information table (i.e., the above table 7), and finds protection paths PID#3 and PID#4 corresponding to port k-2. Node K searches a PID route of PID#3, finds that an NID of a downstream node of node K is "0a", searches a node configuration information table (i.e., the above table 3) of node K and obtains an HO ODUk port (i.e., k-1) corresponding to "0a", then the node K transmits an APS signalling to an APS/PCC overhead of an HO ODU of corresponding port k-1, and the APS signalling includes: request state (NR), PID (#3), T-NID of a terminal node ("07"), S-NID of a source node ("0b"). Node K searches a PID route of PID#4, finds that an NID of a downstream node of node K is "0c", searches a node configuration information table (i.e., the above table 3) of node K and obtains an HO ODUk port (i.e., k-3) corresponding to "0c", then the node K transmits an APS signalling to an APS/PCC overhead of an HO ODU of corresponding port k-3, and the APS signalling includes: request state (NR), PID (#4), T-NID of a terminal node ("07"), S-NID of a source node ("0b");
node L receives the NR of PID#4, performs an idle operation and responds to the NR;
node H receives the NR of PID#4, performs an idle operation and responds to the NR;

Node G detects that APS/PCC byte of its port g-3 changes, then below processing is performed:
node G parses PID information in the APS signalling, and determines that it is a request initiated by SP of #4;
node G parses the T-NID ("07") and the S-NID ("0") in the APS signalling, determines that node G is the terminal node of the APS request and there is an NR, then node G releases port g-3 and responds to the port g-2 with the APS signalling, and the response includes: response state (NR), PID (#4), S-NID of a source node ("07"), T-NID of a terminal node ("0b");
Node J receives the NR, and no processing is performed;
Node F receives the NR, and no processing is performed.

Until then, link resources of PID#4 are released.

As shown in Fig. 18, the embodiment of the disclosure further provides a system for protecting a mesh network that includes end nodes located on a protected span and intermediate nodes on a protection path, wherein
an end node 81 located downstream of a signal stream on the protected span is configured to, upon detection of a failure on the protected span, transmit an Automatic Protection Switch (APS) request signalling along at least one protection path of the protected span according to configuration information of the end node;
an end node 82 located upstream of the signal stream on the protected span is configured to, upon reception of the APS request signalling, transmit an APS response signalling along a relevant protection path, and perform a relevant bridging/switching operation according to its configuration information;
intermediate nodes 83 receiving the APS response signalling are configured to perform a relevant straight-forward operation according to respective configuration information; and
the end node 81 receiving the APS response signalling and located downstream of the signal stream is configured to perform a relevant bridging/switching operation according to its configuration information.

Preferably, When the end node 81 located downstream of the signal stream transmits the APS request signalling along multiple protection paths of the protected span, the end node 82 located upstream of the signal stream is configured to select a protection path for performing protection switching, wherein an APS response signalling transmitted along the selected protection path carries a Reverse Request (RR) and an APS response signalling transmitted along a non-selected protection path carries a Non-Request (NR).

The configuration information includes the node configuration information table and the SMP configuration information table,
wherein the node configuration information table comprises a relevant ID of a node, a corresponding High Ordered Optical Data Unit k (HO ODUk) port, a corresponding HO ODUk state and a remote signalling; and
wherein the SMP configuration information table comprises a Protection ID (PID), an operating port and a PID route.

Preferably, the end node 81 located downstream of the signal stream on the protected span is further configured to, when detecting that the failure on the protected span disappears, start a Waiting Time for Recovery (WTR), and transmit a WTR request along the at least one protection path of the protected span, and after receiving the WTR request, the end node 82 located upstream of the signal stream on the protected span responds to the RR, and the end node 82 located upstream of the signal stream and the end node 81 located downstream of the signal stream are in a switching state until the WTR expires;
when the WTR expires, the end node 81 located downstream of the signal stream transmits an APS request signalling carrying the NR along the at least one protection path of the protected span according to its configuration information, releases a corresponding idle port for a node receiving the APS carrying the NR on a protection path performing protection on the protected span, and responds to the NR.

The system for protecting a mesh network according to an embodiment of the disclosure applies at least to below scenarios: protection of a mesh network based on Optical Channel (OCH) and protection of a mesh network based on Optical Multiplexer Section (OMS).

### INDUSTRIAL APPLICABILITY

The embodiments of the disclosure can improve the protection switching performance of the mesh network and enhance its robustness to failures so that at least two failures in a pipeline can be resisted.

What described are merely preferable embodiments of the disclosure, and are not intended to limit the disclosure.

## Claims

1. A method for protecting a mesh network, the method comprising:
upon detection of a failure on a protected span, transmitting, by an end node located downstream of a signal stream on the protected span, an Automatic Protection Switch, APS request signalling along at least one protection path of the protected span according to configuration information of the end node (S101); and
upon reception of the APS request signalling, transmitting, by an end node located upstream of the signal stream on the protected span, an APS response signalling along a protection path, and performing a bridging/switching operation according to its configuration information; performing, by intermediate nodes receiving the APS response signalling, a straight-forward operation according to respective configuration information; and performing, by an end node receiving the APS response signalling and located downstream of the signal stream, a bridging/switching operation according to its configuration information (S102);
wherein before the detection of the failure, further comprising:
configuring a node configuration information table for respective nodes in the mesh network, wherein the node configuration information table comprises a ID of a node, a corresponding High Ordered Optical Data Unit k, HO ODUk port, a corresponding HO ODUk state and a remote signalling;
configuring span protection for the mesh network, configuring at least one protection path for each protected span, and configuring a Shared Mesh Protection, SMP configuration information table for nodes in the mesh network, wherein the SMP configuration information table comprises a Protection ID, PID, an operating port and a PID route; and
the configuration information comprises the node configuration information table and the SMP configuration information table.

2. The method according to claim 1, wherein when the end node located downstream of the signal stream transmits the APS request signalling along multiple protection paths of the protected span, the end node located upstream of the signal stream selects a protection path for performing protection switching, and an APS response signalling transmitted along the selected protection path carries a Reverse Request, RR and an APS response signalling transmitted along a non-selected protection path carries a Non-Request, NR.

3. The method according to claim 1 or 2, further comprising: in an HO ODU of each span in the mesh network, allocating a half of slots as protected resources and allocating the other half of the slots as protecting resources.

4. The method according to claim 1 or 2, where the APS request signalling and the APS response signalling are transported through APS overheads or Protection Communication Control, PCC overheads of the HO ODUk.

5. The method according to claim 1 or 2, wherein when the end node located downstream of the signal stream on the protected span detects that the failure on the protected span disappears, said end node starts a Waiting Time for Recovery, WTR, and transmits a WTR request along the at least one protection path of the protected span, and after receiving the WTR request, the end node located upstream of the signal stream on the protected span responds to the RR, and the end node located upstream of the signal stream and the end node located downstream of the signal stream are in a switching state until the WTR expires;
when the WTR expires, the end node located downstream of the signal stream transmits an APS request signalling carrying the NR along the at least one protection path of the protected span according to its configuration information, releases a corresponding idle port for a node receiving the APS carrying the NR on a protection path performing protection on the protected span, and responds to the NR.

6. A system for protecting a mesh network, the system comprising end
nodes located on a protected span and intermediate nodes on a protection path, wherein
an end node located downstream of a signal stream on the protected span (81) is configured to, upon detection of a failure on the protected span, transmit an Automatic Protection Switch, APS request signalling along at least one protection path of the protected span according to configuration information of the end node;
an end node located upstream of the signal stream on the protected span (82) is configured to, upon reception of the APS request signalling, transmit an APS response signalling along a protection path, and perform a bridging/switching operation according to its configuration information;
intermediate nodes receiving the APS response signalling (83) are configured to perform a straight-forward operation according to respective configuration information; and
an end node receiving the APS response signalling and located downstream of the signal stream (81) is configured to perform a bridging/switching operation according to its configuration information;
wherein the configuration information comprises a node configuration information table and a Shared Mesh Protection, SMP configuration information table,
wherein the node configuration information table comprises a ID of a node, a corresponding High Ordered Optical Data Unit k, HO ODUk port, a corresponding HO ODUk state and a remote signalling; and
wherein the SMP configuration information table comprises a Protection ID, PID, an operating port and a PID route.

7. The system according to claim 6, wherein when the end node located downstream of the signal stream (81) transmits the APS request signalling along multiple protection paths of the protected span, the end node located upstream of the signal stream (82) is configured to select a protection path for performing protection switching, wherein an APS response signalling transmitted along the selected protection path carries a Reverse Request, RR and an APS response signalling transmitted along a non-selected protection path carries a Non-Request, NR.

8. The system according to claim 6 or 7, wherein in an HO ODU of each span in the mesh network, a half of a slot is allocated as protected resources and the other half of the slot is allocated as protecting resources.

9. The system according to claim 6 or 7, where the APS request signalling and the APS response signalling are transported through APS overheads or Protection Communication Control, PCC overheads of the HO ODUk.

10. The system according to claim 6 or 7, wherein the end node located downstream of the signal stream on the protected span (81) is configured to, upon detecting that the failure on the protected span disappears, start a Waiting Time for Recovery, WTR, and transmit a WTR request along the at least one protection path of the protected span; and after receiving the WTR request, the end node located upstream of the signal stream on the protected span (82) responds to the RR, and the end node located upstream of the signal stream (82) and the end node located downstream of the signal stream (81) are in a switching state until the WTR expires;
when the WTR expires, the end node located downstream of the signal stream (81) transmits an APS request signalling carrying the NR along the at least one protection path of the protected span according to its configuration information, releases a corresponding idle port for a node receiving the APS carrying the NR on a protection path performing protection on the protected span, and responds to the NR.

## Patentansprüche

1. Verfahren zum Schutz eines Maschennetzwerks, wobei das Verfahren Folgendes umfasst:
wenn ein Fehler auf einem geschützten Bereich festgestellt wird, Übertragen, durch einen Endknoten, der stromabwärts eines Signalstroms auf der geschützten Spanne angeordnet ist, einer Automatikschutz-Switch- (Automatic Protection Switch - APS) Anforderungssignalisierung entlang mindestens eines Schutzpfads des geschützten Bereichs gemäß Konfigurationsinformationen des Endknotens (S101); und
bei Empfang der APS-Anforderungssignalisierung, Senden, durch einen Endknoten, der stromaufwärts des Signalstroms auf der geschützten Spanne angeordnet ist, einer APS-Antwortsignalisierung entlang eines Schutzpfads, und Durchführen eines Überbrückungs-/Switch-Vorgangs gemäß seiner Konfigurationsinformationen; Durchführen eines geradlinigen Vorgangs gemäß den jeweiligen Konfigurationsinformationen durch Zwischenknoten, die die APS-Antwortsignalisierung empfangen; und Durchführen eines Überbrückungs-/Switch-Vorgangs gemäß seiner Konfigurationsinformationen (S102) durch einen Endknoten, der die APS-Antwortsignalisierung empfängt und stromabwärts des Signalstroms angeordnet ist;
wobei das Verfahren vor der Erfassung des Fehlers ferner Folgendes umfasst:
Konfigurieren einer Knotenkonfigurationsinformationstabelle für jeweilige Knoten in dem Maschennetzwerk, wobei die Knotenkonfigurationsinformationstabelle Folgendes umfasst: eine ID eines Knotens, einen entsprechenden Anschluss einer hochgeordneten optischen Dateneinheit k (High Ordered Optical Data Unit k, HO-ODUk), einen entsprechenden HO-ODUk-Zustand und eine entfernte Signalisierung;
Konfigurieren eines Bereichsschutzes für das Maschennetzwerk, Konfigurieren von mindestens einem Schutzpfad für jeden geschützten Bereich und Konfigurieren einer Konfigurationsinformationstabelle für gemeinsam genutzten Maschenschutz (Shared Mesh Protection, SMP) für Knoten in dem Maschennetzwerk, wobei die SMP-Konfigurationsinformationstabelle eine Schutz-ID, PID, einen Betriebsanschluss und eine PID-Route umfasst; und
die Konfigurationsinformationen die Knotenkonfigurationsinformationstabelle und die SMP-Konfigurationsinformationstabelle umfassen.

2. Verfahren nach Anspruch 1, wobei, wenn der Endknoten, der stromabwärts des Signalstroms angeordnet ist, die APS-Anforderungssignalisierung entlang mehrerer Schutzpfade des geschützten Bereichs sendet, der stromaufwärts des Signalstroms angeordnete Endknoten einen Schutzpfad zum Durchführen einer Schutzschaltung auswählt und eine APS-Antwortsignalisierung, die entlang des ausgewählten Schutzpfads gesendet wird, eine Rückwärtsanforderung (Reverse Request, RR) überträgt, und eine APS-Antwortsignalisierung, die entlang des nicht ausgewählten Schutzpfads gesendet wird, eine Nicht-Anforderung (Non-Request, NR) überträgt,

3. Verfahren nach Anspruch 1 oder 2, das ferner Folgendes umfasst: in einer HO-ODU jedes Bereichs in dem Maschennetz, Zuteilen einer Hälfte von Schlitzen als geschützte Ressourcen und Zuteilen der anderen Hälfte der Schlitze als schützende Ressourcen.

4. Verfahren nach Anspruch 1 oder 2, wobei die APS-Anforderungssignalisierung und die APS-Antwortsignalisierung über APS-Overheads oder Schutzkommunikationssteuerungs- (Protection Communication Control, PCC) Overheads des HO-ODUk transportiert werden.

5. Verfahren nach Anspruch 1 oder 2, wobei, wenn der Endknoten, der stromabwärts des Signalstroms auf dem geschützten Bereich angeordnet ist, erfasst, dass der Fehler auf dem geschützten Bereich verschwindet, der Endknoten eine Wartezeit zur Wiederherstellung (Waiting Time for Recovery, WTR) startet und eine WTR-Anforderung auf dem mindestens einen Schutzpfad des geschützten Bereichs sendet, und der Endknoten, der stromaufwärts des Signalstroms auf dem geschützten Bereich angeordnet ist, nach Empfang der WTR-Anforderung auf die RR antwortet und der stromaufwärts des Signalstroms angeordnete Endknoten und der stromabwärts des Signalstroms angeordnete Endknoten sich in einem Schaltzustand befinden, bis die WTR abläuft;
wenn die WTR abläuft, sendet der Endknoten, der stromabwärts des Signalstroms angeordnet ist, eine APS-Anforderungssignalisierung, die die NR auf dem mindestens einen Schutzpfad des geschützten Bereichs gemäß seiner Konfigurationsinformationen trägt, er gibt einen entsprechenden Leerlaufanschluss für einen Knoten frei, der den APS empfängt, der die NR auf einem Schutzpfad trägt, der den Schutz auf dem geschützten Bereich durchführt, und reagiert auf die NR.

6. System zum Schutz eines Maschennetzwerks, wobei das System Endknoten, die auf einem geschützten Bereich angeordnet sind, und Zwischenknoten auf einem Schutzpfad umfasst, wobei
ein Endknoten, der stromabwärts eines Signalstroms auf dem geschützten Bereich (81) angeordnet ist, so konfiguriert ist, dass er bei Erfassung eines Fehlers auf dem geschützten Bereich eine Automatikschutz-Switch-, APS, Anforderungssignalisierung auf mindestens einem Schutzpfad des geschützten Bereichs gemäß den Konfigurationsinformationen des Endknotens sendet;
ein Endknoten, der stromaufwärts eines Signalstroms auf dem geschützten Bereich (82) angeordnet ist, so konfiguriert ist, dass er bei Empfang der APS-Anforderungssignalisierung eine APS-Antwortsignalisierung auf einem Schutzpfad sendet und einen Überbrückungs-/Switching-Vorgang entsprechend seiner Konfigurationsinformationen durchführt;
Zwischenknoten, die die APS-Antwortsignalisierung (83) empfangen, konfiguriert sind, um einen geradlinigen Vorgang entsprechend der jeweiligen Konfigurationsinformationen durchzuführen; und
ein Endknoten, der die APS-Antwortsignalisierung empfängt und stromabwärts des Signalstroms (81) angeordnet ist, konfiguriert ist, um einen Überbrückungs-/Switching-Vorgang gemäß seiner Konfigurationsinformationen durchzuführen;
wobei die Konfigurationsinformationen eine Knotenkonfigurationsinformationstabelle und eine SMP-Konfigurationsinformationstabelle für gemeinsam genutzten Maschenschutz umfassen,
wobei die Knotenkonfigurationsinformationstabelle Folgendes umfasst: eine ID eines Knotens, einen entsprechenden Anschluss einer hochgeordneten optischen Dateneinheit k (High Ordered Optical Data Unit k, HO-ODUk), einen entsprechenden HO-ODUk-Zustand und eine entfernte Signalisierung; und
wobei die SMP-Konfigurationsinformationstabelle eine Schutz-ID, PID, einen Betriebsanschluss und eine PID-Route umfasst.

7. System nach Anspruch 6, wobei, wenn der Endknoten, der stromabwärts des Signalstroms (81) angeordnet ist, die APS-Anforderungssignalisierung entlang mehrerer Schutzpfade des geschützten Bereichs sendet, der Endknoten, der stromaufwärts des Signalstroms (82) angeordnet ist, konfiguriert ist, einen Schutzpfad zum Durchführen einer Schutzschaltung auszuwählen, wobei eine APS-Antwortsignalisierung, die entlang des ausgewählten Schutzpfads gesendet wird, eine Rückwärtsanforderung, RR, überträgt, und eine APS-Antwortsignalisierung, die entlang eines nicht ausgewählten Schutzpfades gesendet wird, einen Nicht-Anforderung, NR, überträgt.

8. System nach Anspruch 6 oder 7, wobei in einer HO-ODU jedes Bereichs in dem Maschennetz die Hälfte eines Schlitzes als geschützte Ressourcen zugeordnet ist und die andere Hälfte des Schlitzes als schützende Ressourcen zugeordnet ist.

9. System nach Anspruch 6 oder 7, wobei die APS-Anforderungssignalisierung und die APS-Antwortsignalisierung über APS-Overheads oder Schutzkommunikationssteuerungs- (Protection Communication Control, PCC) Overheads des HO-ODUk transportiert werden.

10. System nach Anspruch 6 oder 7, wobei der Endknoten, der stromabwärts des Signalstroms auf dem geschützten Bereich (81) angeordnet ist, dafür konfiguriert ist, bei Erfassen, dass der Fehler auf dem geschützten Bereich verschwindet, eine Wartezeit zur Wiederherstellung, WTR, zu starten und eine WTR-Anforderung auf dem mindestens einen Schutzpfad des geschützten Bereichs zu senden; und der Endknoten, der stromaufwärts des Signalstroms auf dem geschützten Bereich (82) angeordnet ist, nach Empfang der WTR-Anforderung auf die RR antwortet und der stromaufwärts des Signalstroms (82) angeordnete Endknoten und der stromabwärts des Signalstroms (81) angeordnete Endknoten sich in einem Schaltzustand befinden, bis die WTR abläuft;
wenn die WTR abläuft, sendet der Endknoten, der stromabwärts des Signalstroms (81) angeordnet ist, eine APS-Anforderungssignalisierung, die die NR auf dem mindestens einen Schutzpfad des geschützten Bereichs gemäß seiner Konfigurationsinformationen trägt, er gibt einen entsprechenden Leerlaufanschluss für einen Knoten frei, der den APS empfängt, der die NR auf einem Schutzpfad trägt, der den Schutz auf dem geschützten Bereich durchführt, und reagiert auf die NR.

## Revendications

1. Procédé de protection d'un réseau maillé, le procédé comprenant les étapes suivantes :
lors de la détection d'une défaillance sur une plage protégée, transmission, par un noeud d'extrémité situé en aval d'un flux de signal sur la plage protégée, d'une signalisation de demande de commutation de protection automatique (*Automatic Protection Switch,* APS) sur au moins un chemin de protection de la plage protégée en fonction des informations de configuration du noeud d'extrémité (S101) ; et
lors de la réception de la signalisation de demande APS, transmission, par un noeud d'extrémité situé en amont du flux de signal sur la plage protégée, d'une signalisation de réponse APS sur un chemin de protection, et réalisation d'une opération de transition/commutation en fonction de ses informations de configuration ; réalisation, par des noeuds intermédiaires recevant la signalisation de réponse APS, d'une opération simple en fonction d'informations de configuration respectives ; et réalisation, par un noeud d'extrémité recevant la signalisation de réponse APS et situé en aval du flux de signal, d'une opération de transition/commutation en fonction de ses informations de configuration (S102) ;
lequel procédé comprenant les étapes suivantes, avant la détection de la défaillance :
configuration d'un tableau d'informations de configuration de noeud pour les noeuds respectifs dans le réseau maillé, dans lequel le tableau d'informations de configuration de noeud comprend un identifiant de noeud, un port d'unité de données optique d'ordre élevé k *(High Ordered Optical Data Unit k,* HO ODUk) correspondant, un état HO ODUk correspondant et une signalisation à distance ;
configuration de la protection de plage pour le réseau maillé, configuration d'au moins un chemin de protection pour chaque plage protégée, et configuration d'un tableau d'informations de configuration de protection de maille partagée *(Shared Mesh Protection,* SMP) pour des noeuds dans le réseau maillé, dans lequel le tableau d'informations de configuration SMP comprend un identifiant de protection (*Protection ID,* PID), un port de fonctionnement et une voie PID ; et
les informations de configuration se composent du tableau d'informations de configuration de noeud et du tableau d'informations de configuration SMP.

2. Procédé selon la revendication 1, dans lequel, lorsque le noeud d'extrémité situé en aval du flux de signal transmet la signalisation de demande APS sur de multiples chemins de protection de la plage protégée, le noeud d'extrémité situé en amont du flux de signal sélectionne un chemin de protection pour réaliser la commutation de protection, et une signalisation de réponse APS transmise sur le chemin de protection sélectionné porte une demande d'inversion (*Reverse Request,* RR), et une signalisation de réponse APS transmise sur un chemin de protection non sélectionné porte une non-demande (*Non-Request,* NR).

3. Procédé selon la revendication 1 ou 2, comprenant en outre les étapes suivantes :
dans une HO ODU de chaque plage dans le réseau maillé, attribution d'une moitié de créneaux en tant que ressources protégées, et attribution de l'autre moitié des créneaux en tant que ressources de protection.

4. Procédé selon la revendication 1 ou 2, dans lequel la signalisation de demande APS et la signalisation de réponse APS sont transportées par des surdébits APS ou des surdébits de protocole de communication de protection (*Protection Communication Control,* PCC) de la HO ODUk.

5. Procédé selon la revendication 1 ou 2, dans lequel, lorsque le noeud d'extrémité situé en aval du flux de signal sur la plage protégée détecte la disparition de la défaillance sur la plage protégée, ledit noeud d'extrémité commence un temps d'attente avant reprise (*Waiting Time for Recovery,* WTR) et transmet une demande WTR sur l'au moins un chemin de protection de la plage protégée, et, après réception de la demande WTR, le noeud d'extrémité situé en amont du flux de signal sur la plage protégée répond à la RR, et le noeud d'extrémité situé en amont du flux de signal et le noeud d'extrémité situé en aval du flux de signal sont dans un état de commutation jusqu'à l'expiration du WTR ;
lorsque le WTR arrive à expiration, le noeud d'extrémité situé en aval du flux de signal transmet une signalisation de demande APS portant la NR sur l'au moins un chemin de protection de la plage protégée en fonction de ses informations de configuration, libère un port disponible correspondant pour un noeud recevant l'APS portant la NR sur un chemin de protection assurant la protection sur la plage protégée, et répond à la NR.

6. Système de protection d'un réseau maillé, le système comprenant des noeuds d'extrémité situés sur une plage protégée, et des noeuds intermédiaires sur un chemin de protection, dans lequel
un noeud d'extrémité situé en aval d'un flux de signal sur la plage protégée (81) est configuré pour, lors de la détection d'une défaillance sur la plage protégée, transmettre une signalisation de demande de commutation de protection automatique (*Automatic Protection Switch,* APS) sur au moins un chemin de protection de la plage protégée en fonction des informations de configuration du noeud d'extrémité ;
un noeud d'extrémité situé en amont du flux de signal sur la plage protégée (82) est configuré pour, lors de la réception de la signalisation de demande APS, transmettre une signalisation de réponse APS sur un chemin de protection et réaliser une opération de transition/commutation en fonction de ses informations de configuration ;
des noeuds intermédiaires recevant la signalisation de réponse APS (83) sont configurés pour réaliser une opération simple en fonction d'informations de configuration respectives ; et
un noeud d'extrémité recevant la signalisation de réponse APS et situé en aval du flux de signal (81) est configuré pour réaliser une opération de transition/commutation en fonction de ses informations de configuration ;
dans lequel les informations de configuration se composent d'un tableau d'informations de configuration de noeud et d'un tableau d'informations de configuration de protection de maille partagée (*Shared Mesh Protection,* SMP),
dans lequel le tableau d'informations de configuration de noeud comprend un identifiant de noeud, un port d'unité de données optique d'ordre élevé k (*High Ordered Optical Data Unit k,* HO ODUk) correspondant, un état HO ODUk correspondant et une signalisation à distance ; et
dans lequel le tableau d'informations de configuration SMP comprend un identifiant de protection (*Protection ID,* PID), un port de fonctionnement et une voie PID.

7. Système selon la revendication 6, dans lequel, lorsque le noeud d'extrémité situé en aval du flux de signal (81) transmet la signalisation de demande APS sur de multiples chemins de protection de la plage protégée, le noeud d'extrémité situé en amont du flux de signal (82) est configuré pour sélectionner un chemin de protection pour réaliser la commutation de protection, dans lequel une signalisation de réponse APS transmise sur le chemin de protection sélectionné porte une demande d'inversion (*Reverse Request,* RR), et une signalisation de réponse APS transmise sur un chemin de protection non sélectionné porte une non-demande (*Non-Request,* NR).

8. Système selon la revendication 6 ou 7, dans lequel, dans une HO ODU de chaque plage dans le réseau maillé, une moitié de créneaux est attribuée en tant que ressources protégées, et l'autre moitié des créneaux est attribuée en tant que ressources de protection.

9. Système selon la revendication 6 ou 7, dans lequel la signalisation de demande APS et la signalisation de réponse APS sont transportées par des surdébits APS ou des surdébits de protocole de communication de protection (*Protection Communication Control,* PCC) de la HO ODUk.

10. Système selon la revendication 6 ou 7, dans lequel le noeud d'extrémité situé en aval du flux de signal sur la plage protégée (81) est configuré pour, lors de la détection de la disparition de la défaillance sur la plage protégée, commencer un temps d'attente avant reprise (*Waiting Time for Recovery,* WTR) et transmettre une demande WTR sur l'au moins un chemin de protection de la plage protégée, et, après réception de la demande WTR, le noeud d'extrémité situé en amont du flux de signal sur la plage protégée (82) répond à la RR, et le noeud d'extrémité situé en amont du flux de signal (82) et le noeud d'extrémité situé en aval du flux de signal (81) sont dans un état de commutation jusqu'à l'expiration du WTR ;
lorsque le WTR arrive à expiration, le noeud d'extrémité situé en aval du flux de signal (81) transmet une signalisation de demande APS portant la NR sur l'au moins un chemin de protection de la plage protégée en fonction de ses informations de configuration, libère un port disponible correspondant pour un noeud recevant l'APS portant la NR sur un chemin de protection assurant la protection sur la plage protégée, et répond à la NR.
